(19) Europäisches Patentamt / European Patent Office / Office européen des brevets

(11) **EP 3 046 866 B1**

(12) **EUROPEAN PATENT SPECIFICATION**

(45) Date of publication and mention
of the grant of the patent:
**09.08.2017 Bulletin 2017/32**

(51) Int Cl.:
**B67D 1/04** *(2006.01)*    **F04B 51/00** *(2006.01)*
**G01F 25/00** *(2006.01)*

(21) Application number: **14771299.6**

(86) International application number:
**PCT/EP2014/069966**

(22) Date of filing: **19.09.2014**

(87) International publication number:
**WO 2015/040146 (26.03.2015 Gazette 2015/12)**

(54) **A CALIBRATION METHOD FOR A BEVERAGE DISPENSING SYSTEM, AND A BEVERAGE DISPENSING SYSTEM UTILIZING THE CALIBRATION METHOD**

KALIBRIERVERFAHREN UND GETRÄNKEAUSGABESYSTEM

PROCÉDÉ D'ÉTALONNAGE ET SYSTÈME DE DISTRIBUTION DE BOISSON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.09.2013 EP 13185314**

(43) Date of publication of application:
**27.07.2016 Bulletin 2016/30**

(73) Proprietor: **Carlsberg Breweries A/S
1799 Copenhagen V (DK)**

(72) Inventors:
- **RASMUSSEN, Jan Nørager**
  **DK-3650 Ølstykke (DK)**
- **VESBORG, Steen**
  **DK-2820 Gentofte (DK)**

(74) Representative: **Nielsen, Henrik Sten
Budde Schou A/S
Hausergade 3
1128 Copenhagen K (DK)**

(56) References cited:
**WO-A1-2012/010659    WO-A2-2010/129806
US-A1- 2007 264 130**

EP 3 046 866 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Background of the invention

Conventional beverage dispensing systems intended for professional or private use such as e.g. the DraughtMaster™ system produced by the applicant company are described in e.g. WO2007/019848, WO2007/019849, WO2007/019850, WO2007/019851 and WO2007/ 019853. Such beverage dispensing systems are used to store and dispense mainly carbonated beverages such as beer. Using a beverage dispensing system for storing and dispensing beverage provides many advantages compared to using cans or bottles. Most commercial beverage dispensing systems include a tapping system for a simple dispensing of the beverage into a beverage glass and a cooling system for keeping the beverage at a constant and correct low temperature.

For hygienic reasons all parts contacting the beverage must be handled in a sterile way to avoid dirt and bacteria to enter the beverage. Bacterial growth within the beverage will significantly reduce the flavour of the beverage and will pose a serious health problem for anyone drinking the beverage. Therefore, in most modern beverage dispensing systems the beverage container, the dispensing line connected thereto and the tapping valve are for single use only. In this way the beverage will be kept away from any possible contaminants during storage and dispensing. To ensure that the sterility of the parts contacting the beverage is maintained, it is therefore not allowed to disassemble the parts contacting the beverage, i.e. disconnecting the dispensing line from the container or the tapping valve from the tapping line. Such disconnections would compromise the sterile environment of the beverage.

Some beverage dispensing systems, such as the above mentioned DraughtMaster™ system, use a lightweight, collapsible and disposable beverage container or keg for accommodating the beverage and a pressurizing system for allowing the beverage flow from the container to the tapping system. The collapsible beverage container is typically made of thin and flexible plastic material and may even be in the form of a plastic bag. Typical volumes of beverage included in the beverage container are between 5-10 litres for systems intended for private users and between 10-50 litres for systems intended for professional users such as bars and restaurants. Even larger containers, such as tanks of 1000 litres or more may be used for professional users having a very large turnover of beverage, such as for arenas, stadiums or the like. The head space of the beverage container is either very small or non-existent. The filled beverage container is accommodated in an inner volume of a pressure chamber of the beverage dispensing system.

Before a user may start beverage dispensing operations, the pre-filled collapsible container must be installed into the pressure chamber of the beverage dispensing system. The pressure chamber is thereby opened and the beverage container installed therein, after which the pressure space is sealed and pressurized. The pressure in the pressure chamber prevents any major loss of carbonization of the beverage and allows the beverage to be propelled to the tapping system via a tapping line by compressing the beverage container. When the beverage container is empty, it has collapsed and may be removed from the inner volume by opening the pressure chamber.

A drawback of the above-mentioned beverage dispensing system is that the beverage container normally cannot be inspected without difficulty after installation due to the pressurized inner volume. An inspection can only be carried out after first releasing the pressure inside the pressure chamber. Typically, a beverage container remains up to several weeks inside the pressure chamber and during this time the beverage dispensing system may be used by many people. Therefore, the user wishing to dispense beverage cannot easily determine the remaining amount of beverage in the beverage dispensing system. On the contrary, it is very simple for a user to determine the remaining amount of beverage in a bottle or can by either estimating the weight of the beverage in the container or alternatively performing a visual inspection.

A user wishing to perform a series of beverage dispensing operations, e.g. to fill several beverage glasses with beverage for a group of people, may occasionally be operating a beverage dispensing system having an insufficient amount of beverage remaining in the beverage container. The user may therefore occasionally have to interrupt beverage dispensing when the beverage container is empty. Such interruptions are very annoying, especially in case only a few members of the group have been served. If the user was able to have at least an estimate of the remaining beverage, the user might want to use another beverage dispensing system or arrange for a new cool beverage container to be installed in the beverage dispensing system before initiating the beverage dispensing operations. Therefore technologies are needed for estimating the amount of beverage remaining in the beverage container without the need of performing an estimation of the weight or a visual inspection.

One way of determining the volume of the remaining beverage in the collapsible container would be to measure and store the volume of the out-flowing beverage of a beverage container having a pre-determined volume. However, not all beverage containers have a predetermined volume, e.g. when a beverage container from which some beverage has already been dispensed, is installed in the beverage dispensing system. Further, as carbonated beverage, such as beer, generates at least some amount of foam during dispensing, foam may already be generated in the dispensing line leading from the beverage container to the tapping system. Such foam may render the flow measurements to be less accurate. This may lead the user to believe that less beverage is remaining in the beverage container. Furthermore, measuring the outflow of beverage is undesired since this would necessitate mechanical parts contacting the beverage. Typically, for hygienic reasons all parts contacting the beverage in modern beverage dispensing systems are replaceable and of single use only. This would require the measurement system to be replaceable and thus very expensive.

In the prior art several approaches have been made for measuring the beverage remaining in the beverage container. Some techniques are based on the position of a dispensing valve or beverage tap. One example of an apparatus utilizing the position of the valve or tap to calculate remaining content is described in US 4,225,057 A, which apparatus uses position detecting means coupled to a beverage outlet to detect a movement between an open and a closed position of the outlet. A predetermined flow rate through the outlet allows the calculation of the total amount of fluid passing. Alternatively, as described in US 5,511,694, a calculation of the time during which the handle has been in an open position is used to calculate the remaining volume, which is then shown on a display.

A refined solution is disclosed in US 2008/0071424 which describes a fluid flow measuring system based on a positional flow sensing device coupled to a control valve dispensing mechanism for converting positional information to flow volume using transfer functions based on pressure, line diameter, etc. A compact solution is disclosed in US 7,096,617 B2 in which a tap handle is illuminated by a light source. A motion sensor in the tap handle starts a timer when the tap is moved, which, after reaching a predetermined time, interrupts electrical power to the light source, indicating that the keg is almost empty. In addition to the above documents, references were found which calculate the remaining volume based on actions of other elements of a dispensing device, such as US 7,337,920 B2 which uses a stepping motor to dispense a flavouring fluid, the number of dispenses and the volume of each dispense being used to calculate a remaining volume. Another example is EP 1 218 286 B1 in which a volume counter and a memory are mounted on a keg, the amount tapped being used to indicate when a keg is nearly empty.

A number of prior art technologies use the pressure to measure the content of a keg. US 3,311,267 A discloses a sight tube connected to the beer tap line and the headspace, thus allowing the level of beer in the container to be read. Further documents describing technologies which are utilizing the pressure difference between the beverage in the container and the headspace gas are: GB 1 223 848 A, US 3,956,934 A, GB 1 577 499 A, GB 2 077 432 A, GB 2 099 584 A, EP 2 065 685 A2, US 2009/0165477 A1. In addition, a method for measuring the volume of a malted beverage packed in a bag in a large tank is disclosed in EP 0 791 810 A2 in which a detachable pipe bend in the bag has a pressure difference sensor. A further reference disclosing a gauge tube is EP 2 041 525 A1 in which the gauge tube is pressurized to the same pressure as the liquid in the container. A variant on differential pressure techniques for determining the liquid level in a container is disclosed in GB 2 192 989 A in which gas is forced into a spear having an opening at the bottom of the keg. When bubbles start to rise from the opening, the difference in pressure between the supplied gas and the headspace of the keg indicates the level of beverage. A similar technique is described in published GB 2 094 474. Pressure may also be used to measure flow, as described in EP 0 414 156 A2 in which a flow meter includes a line segment of known length, size and material, providing a measurable pressure difference owing to the drag therein. In WO 2004/050537 A2 a technology is described in which the remaining volume of beverage in the beverage container is determined by using the time rate of change of pressure rise in the keg subsequent to a normal dispense cycle. However, this will require a constant rate of gas filling, which may be difficult to obtain by using standard hardware. Pressure fluctuations within the system may also introduce errors in the mathematical determination of the time rate of change of pressure rise.

Yet further prior art technologies determine the volume of the beverage flowing out of the beverage container indirectly by measuring in-flowing gas which substitutes the out-flowing beverage. In this way the problems associated with the direct measuring of the beverage flowing out of the beverage container is avoided. The in-flow of pressuring gas into a container is measured in the technology presented in EP 2 053 014 A1. The remaining amount of the beverage in the beverage container is thereby calculated based on the flow rate of the gas. The drawback of such indirect measurement methods is the possibility of cumulative systematic errors which may significantly affect the final result, i.e. the determination of the volume of beverage in a nearly empty beverage container. A similar technique for a bottle is described in EP 2 091 858 A1 where a pourer spout has an airflow measurement unit for measuring the inflow of air into a container on which the spout is mounted, and thereby the dispensed volume may be determined.

Further prior art references use the weight of a beverage container to determine the remaining contents. One example has been described in DE 35 11 224 in which a device for registering the liquid content from beverage containers comprises sensors for the container weight. Further references are US 5,837,944 A, GB 2 354 080 A and US 7,255,003 B2. Weight measurements have also been used to dispense a predetermined weight of beverage by monitoring the reduced weight of a supply keg as described in US 5,007,560 A.

Further, temperature-sensitive liquid crystals have been used to detect the liquid level in a container. In US5894089A a technology is disclosed in which an indicator for detecting a liquid level is described, comprising a vessel having a thermo-sensitive tape wherein during use a hot or cold fluid is poured into the vessel whereby the vessel is pressed against the wall of a container, providing a colour change at the level of liquid in the container. The colour change is caused by the differing heat transport properties of the headspace and the liquid in the container. Further references include US 6,260,414 B1, US 6,925,872 B2 and US 7,302,846 B2. An alternative technique is described in EP 1 009 978 A1 in which a handheld device includes temperature-sensitive means for determining the level of a fluid in a container, further including a microprocessor for calculating the amount of fluid in the container.

Further, electrodes have been used to detect a liquid level, one reference being GB 2 170 602 A, in which the level of a liquid in a vessel is measured using the capacitance between first and second electrical conductors positioned at first and second levels, the capacitance varying with the liquid level. Current flowing between two detectors may also be used to determine whether the detectors are covered by a liquid, as is described in US 4,732,297 A.

Further, light has been used to detect a liquid level in a container. GB 2 273 560 A describes a liquid detection apparatus having a photoelectric sensor for determining when the level of liquid has decreased below a predetermined level. The difference in refractive index between the liquid and the gas in the headspace affects the internal reflection in the sensor. The flow of liquid may also be detected by light as described in US 6,819,250 B2 in which a liquid sensor comprises a light transmitting tubular body through which liquid flows, and a photo sensor mounted on the body senses the presence or absence of liquid flowing through the tubular body. Cameras have been used in beverage filling machines as described in EP 0 613 854 B 1 in which liquid levels are determined using video cameras. JP 2007-278778 discloses an apparatus for inspecting liquid filled containers where the liquid level is detected by detecting X-ray light passed through the container. However, the above methods are difficult to use in combination with collapsible containers due to the unpredictable deformation of such containers during dispensing.

Ultrasound is proposed to be used for determining liquid level in EP 1 506 523, disclosing a technology in which a wireless communication device placed within a valve device of a beverage container may communicate with additional sensors to determine a liquid level through measuring the resonance of a fill tube within the container, using a piezo-electric actuator. Further, JP 2005-274204 A discloses a measuring conduit using two ultrasonic oscillators to measure the time delay of ultrasonic waves in a flow of beer to determine the flow of beer.

US 5,909,825 defines a beverage dispensing system using first and second containers, each having a float sensor to indicate the liquid level within the respective container. Further, GB 2 263 687 A discloses a flow meter having an element which is rotatable by a flow of beer. US20050194399A1 discloses a beverage dispensing system measuring beer flow by volume. The flow sensor uses a turbine and IR light to achieve a flow signal.

All of the above technologies require substantial modifications to the existing beverage dispensing system. All the above US patent documents are hereby incorporated by reference.

The applicant company has very recently discovered a new technique for measuring the residual amount of beverage in the beverage dispensing system. The technique is described in detail in WO 2012/010659. The technique involves raising the pressure in the pressure chamber from a predetermined low pressure value to a predetermined high pressure value and establishing a measure of the residual volume of beverage included in the collapsible beverage container based on the specific volume of gas introduced into the inner volume of the pressure chamber per operating cycle by the pressurization system, the number of operating cycles and the volume of the pressure chamber.

By using the above method, the applicant company has found out that it is critical to have the correct value of the specific volume of gas introduced into the inner volume of the pressure chamber per operating cycle by the pressurization system. When calculating the remaining volume of beverage, the specific volume of gas introduced per operating cycle will be multiplied by the number of operating cycles. Any error in the specific volume will thus also be multiplied and thus have a large impact on the final result, i.e. the determination of residual beverage.

The error in the specific volume may have different reasons. Typically, pump and similar pressurization systems have a manufacturing tolerance which may cause an error. Further, wear and tear of the pressurization system may affect the specific volume. Yet further, over time an increased leakage may occur in the pressurization system which leakage may result in an error in the specific volume.

It is therefore an object of the present invention to provide technologies for the accurate measuring of the specific volume of gas introduced into the inner volume of the pressure chamber per operating cycle by the pressurization system.

Summary of the invention

The above together with numerous other objects, which will be evident from the below detailed description of the present invention, are in accordance with a first aspect according to the present invention obtained by a calibration method, the method comprising the steps of:

  providing a beverage dispensing system, the beverage dispensing system comprising a pressure chamber having a removable lid and defining a first inner volume, the pressure chamber being fluidly connected to a pressurization system, the pressurization system being capable of supplying a specific volume of gas per operating cycle of the pressurization system to the first inner volume of the pressure chamber, the pressure chamber further having a pressure sensor for sensing the pressure of the first inner volume of the pressure chamber,

providing a collapsible beverage container, the collapsible beverage container including a second inner volume of beverage, the second inner volume being smaller than the first inner volume, the beverage preferably being a carbonated beverage such as beer, soft drink or wine,

opening the lid, introducing the beverage container into the first inner volume of the pressure chamber and closing the lid,

increasing the pressure value from a predetermined low pressure value to a predetermined high pressure value by using the pressurization system,

determining the number of operating cycles defining the sum of operating cycles of the pressurization system used for raising the pressure value from the predetermined low pressure value to the predetermined high pressure value, and

establishing a measure of the specific volume of gas per operating cycle of the pressurization system of the beverage dispensing system by using the predetermined low pressure value, the predetermined high pressure value, the first inner volume, the second inner volume and the number of operating cycles.

The collapsible container should be of a type deforming during beverage dispensing operations. The second inner volume is defined by essentially the volume of the beverage container itself, and when empty the beverage container will be completely collapsed or flat. The second inner volume excludes a small headspace in the container and the volume of the solid material making up the beverage container. The total volume of the headspace in the container and the volume of the solid material making up the beverage container should preferably be less than 5% of the second inner volume. The pressure chamber should be rigid, i.e. it should be capable of withstanding a pressure of at least a few bar above atmospheric pressure without bulging or deforming. The residual volume, being the first inner volume of the pressure chamber subtracted by the second inner volume being the beverage volume, should be rather small when a new full beverage container is introduced in the pressure chamber, such as 1%-50%, preferably 2%-20%, of the initial volume of beverage.

The pressurization system may be a pump or compressor capable of introducing a specific volume of atmospheric gas into the pressure chamber per operating cycle, independently of the pressure therein. Preferred pressurization systems include reciprocating piston pumps, however, other compressor types such as an axial flow compressor, is equally feasible. The pressurization system is preferably driven by an electrical motor, however, other power sources, such as chemical, hydraulic or pneumatic power sources are feasible. The pressure sensor may e.g. be an electronic sensor or pressure switch for determining pressures around atmospheric pressure. The pressure outside the beverage dispensing system may be considered to be 1 atm or 1 bar. The low pressure value and the high pressure value may be chosen arbitrarily. However, the low pressure value may preferably be sufficiently high for allowing proper beverage dispensing, while the high pressure value may preferably be sufficiently low for not to generate excessive foaming of the dispensed beverage.

When a new beverage container is introduced into the pressure chamber and the pressure chamber is sealed by applying the lid, the second inner volume of the beverage container is fairly well known, since the beverage producer is obliged to specify the total amount of beverage in the container. The second inner volume of beverage must under no circumstances be less than the specified amount; otherwise the consumer will have paid for beverage which was never received. The producers will of course try to keep the error percentage as low as possible, since any large variations in beverage content of different containers may be considered unfair. Thus, the volume of beverage included in the beverage container, i.e. the second inner volume, may be considered to be known within very small tolerances.

The specific volume of gas introduced per operating cycle of the pressurization system is a value which may vary considerably over time and between various locations. Thus, when a new beverage container, having a known second inner volume, is placed inside the pressure chamber, the specific volume of gas introduced per operating cycle of the pressurization system may be calibrated by using the predetermined low pressure value, the predetermined high pressure value, the first inner volume, the second inner volume, and the number of operating cycles. A calculation unit may be used for this purpose.

The calculated value of specific volume of gas introduced per operating cycle used for measuring the remaining volume of beverage is established, as will be explained below, until a new beverage container is inserted into the pressure chamber. Variations in temperature and air-pressure and degradation such as leakage, will influence the specific volume of gas introduced per operating cycle.

According to a further embodiment of the first aspect of the present invention, the measure of the specific volume of gas per operating cycle is established by:

calculating a product by multiplying the difference between the predetermined high pressure value and the predetermined low pressure value, and the difference between the first inner volume and the second inner volume, and

dividing the product and the number of operating cycles.

The outside pressure of the beverage dispensing system may be used as a reference pressure, i.e. 1 bar. This is logical since the dispensing pressure will be the pressure inside the pressure chamber minus the pressure outside the pressure chamber. The volume of beverage remaining specifically volume of gas per operating cycle $V_{spec}$ may be established by the following formula using the ideal gas law:

$$V_{spec} = \frac{(p_{high}-p_{low})(V_{in}-V_{bev})}{n_{op}}$$

wherein $p_{low}$ is the predetermined low pressure value, $p_{high}$ is the predetermined high pressure value, $V_{in}$ is the volume of the first inner volume, $V_{bev}$ is the volume of the second inner volume, and $n_{op}$ is the number of operational cycles of the pressurization system. $V_{bev} = V_{in} - \frac{n_{op} \cdot V_{spec}}{p_{high}-p_{low}}$

According to a further embodiment of the first aspect, the number of operating cycles is determined by measuring the time during which the operating cycles are performed, or, alternatively, wherein the pressurization system is driven by an electrical motor, the number of operating cycles is determined by measuring the number of revolutions of the electrical motor during which the operating cycles are performed, or, yet alternatively, wherein the pressurization system comprises a reciprocating piston, the number of operating cycles is determined by measuring the number of pressure fluctuations occurring within the inner volume when the pressurization system is activated, or, further alternatively, wherein the pressurization system is driven by an electrical motor and the pressurization system comprises a reciprocating piston, the number of operating cycles is determined by measuring the number of current peaks in the supply current of the electrical motor.

In case the pressurization system reaches the nominal working speed quickly and does not suffer from any significant start-up delay, the number of operations may be determined by the time during which the pressurization system is activated. Alternatively, provided an electrical motor is used for powering the pressurization system and the number of revolutions of the electrical motor or a flywheel connected thereto may be monitored by the use of an electrical contact or photocell or the like. Yet alternatively, provided a reciprocating piston is used in the pressurization system, the electronic sensor or pressure switch used for measuring the pressure of the inner volume may be used, since every stroke of the reciprocating piston yields a pressure wave into the inner chamber. By measuring the number of pressure waves, an estimate of the number of cycles can be made. Further alternatively, provided an electrical motor is used for powering the pressurization system and a reciprocating piston is used in the pressurization system, the power supply cables of the electrical motor may be monitored and the number current peaks appearing in the supply current of the electrical motor may be measured. Each current peak corresponds to one revolution since the current maximum will occur once every operation cycle at the point of highest load, i.e. compression, of the reciprocating piston.

According to a further embodiment of the first aspect of the present invention, the predetermined low pressure value is in the order of 1.4-1.6 bar, such as 1.5 bar, and, the predetermined high pressure value is in the order of 1.6-1.8 bar, such as 1.7 bar. The above values are typical values for achieving a good flow of beverage while avoiding excessive foaming.

According to a further embodiment of the first aspect of the present invention, the second inner volume is between 10 litres and 10.1 litres. Ten litres is a typical amount of beverage provided in containers for consumers and smaller establishments. Typically, the error percentage is less than 1%.

According to a further embodiment of the first aspect of the present invention, the predetermined low pressure value and/or the predetermined high pressure value, and/or the second inner volume is entered using an input device of the beverage dispensing system. In some cases the pressure chamber may be located at variable distance from the tapping device and thereby requires a different dispensing pressure. The pressure chamber may also be suitable for accommodating beverage containers of varying sizes. In such cases, the input device, such as a keyboard or knob, may be used to establish the above values into a calculation unit in order to ensure a correct calibration.

According to a further embodiment of the first aspect of the present invention, the first inner volume is compensated by the volume of the plastic material used for the container. Typically, the container is entirely made up of plastic material. The plastic material making up the container is non-compressible and in fact equals a reduction of the first inner volume of the pressure chamber. Thus, in case the volume of plastic material is known, the first inner volume may be compensated for this amount.

According to a further embodiment of the first aspect of the present invention, the method may include the step of presenting a visual indication being visible from the outside of the beverage dispensing system of measure of the specific volume of gas per operating cycle. Preferably, some visual indication is given about the volume of gas per operating cycle. The indication may e.g. be an analogue or digital gauge, one or more lights or the like.

According to a further embodiment of the first aspect of the present invention, the first inner volume ranges between 5 litres and 50 litres, such as 5-10 litres, 10-20 litres, 20-30 litres, 30-40 litres, or 40-50 litres. Typical volumes of private and small commercial systems are between 5-10 litres, and of large commercial systems and professional systems between 10-50 litres.

According to a further embodiment of the first aspect of the present invention, the method further comprises the step of:

measuring a time unit representing the time required for raising the pressure from the predetermined low pressure value to the predetermined high pressure value, and

establishing a measure of the specific volume of gas per time unit of operation of the pressurization system of the beverage dispensing system by using the predetermined low pressure value, the predetermined high pressure value, the first inner volume, the second inner volume, and the time unit. The volume of beverage per time unit may be established. The time unit may be seconds, millisecond etc.

The above together with numerous other objects, which will be evident from the below detailed description of the present invention, are in accordance with a second aspect according to the present invention obtained by a method for determining a residual volume of beverage, the method comprising performing the calibration method according to any of the preceding claims, and further performing the following steps in response to detecting the low pressure value of the inner volume:

increasing the pressure in the inner volume from the low pressure value to the high pressure value by using the pressurization system,

determining the number of operating cycles defining the sum of operating cycles of the pressurization system used for raising the pressure value from the predetermined low pressure value to the predetermined high pressure value, and

establishing a measure of the residual volume of beverage included in the collapsible beverage container, the measure being based on the specific volume of gas per operating cycle of the pressurization system, the first inner volume, the predetermined low pressure value and the predetermined high pressure value.

When the pressure in the inner volume has decreased below the low pressure value, irrespective of whether the decrease of pressure is the result of gas leakage from the first inner volume or the result of beverage dispensing operations, the pressurization system is activated to restore the high pressure. It is contemplated that some beverage dispensing systems may allow a lower pressure before activating the pressurization system, e.g. the pressurization system may not be activated before the beverage dispensing operation has been interrupted. The volume of gas being supplied to the inner volume may be determined by the pressurization system. The volume of the residual volume may be determined as the volume of gas being supplied to the inner volume divided by the difference between the high pressure value and the low pressure value. The volume of remaining beverage in the flexible container at a given time may be determined by subtracting the inner volume from the residual volume. It is contemplated that the walls of the container are thin and thus do not influence the measurement results, or the volume of the walls may be compensated for. A calculation unit of the beverage dispensing system may be used for performing the calculations. The calculation unit which performs the calculations may include a microprocessor. The present method is preferably used during non-beverage dispensing, i.e. the pressurization system is activated during non-beverage dispensing. The method may also be used during beverage dispensing when the volume of beverage dispensed per second is substantially smaller than the volume of pressurized gas introduced into the residual volume per second by the pressurization system. The present method is measuring the remaining volume of beverage in the beverage container as an absolute volume measurement without relying on any previous measurement. The volume of introduced gas per operating cycle has been determined by the previous calibration when the new container was introduced into the pressure chamber.

According to a further embodiment of the second aspect of the present invention, the method further comprising the step of performing a re-calibration by establishing a measure of the specific volume of gas per operating cycle of the pressurization system of the beverage dispensing system by using the predetermined low pressure value, the predetermined high pressure value, the first inner volume, the second inner volume and the number of operating cycles. In case of changing external conditions, i.e. major change in surrounding temperature or pressure, a re-calibration may be used using the calculated remaining volume of the container.

The above together with numerous other objects, which will be evident from the below detailed description of the present invention, are in accordance with a third aspect according to the present invention obtained by a beverage dispensing system, the beverage dispensing system comprising:

a pressure chamber having a removable lid and defining a first inner volume for receiving a collapsible beverage container, the collapsible beverage container including a second inner volume of beverage, the second inner volume being smaller than the first inner volume, the beverage preferably being a carbonated beverage such as beer or soft drink,

a pressurization system fluidly connected to the pressure chamber, the pressurization system being capable of supplying a specific volume of gas per operating cycle of the pressurization system to the first inner volume of the pressure chamber, the pressurization system being capable of increasing the pressure value from a predetermined low pressure value to a predetermined high pressure value,
a pressure sensor for sensing a pressure value corresponding to the absolute pressure of the first inner volume of the pressure chamber,
a calculation unit for determining a number of operating cycles defining the sum of operating cycles of the pressurization system used for raising the pressure value from the predetermined low pressure value to the predetermined high pressure value, and
a processing unit for establishing a measure of the specific volume of gas per operating cycle of the pressurization system of the beverage dispensing system by using the predetermined low pressure value, the predetermined high pressure value, the first inner volume, the second inner volume, and the number of operating cycles.

It is evident that the present system according to the third aspect of the present invention may be used together with any of the methods according to the first aspect or second aspect of the present invention.

According to a further embodiment of the third aspect, the pressurization system includes a housing, a reciprocating piston operating within the housing and a one-way valve, each operating cycle including a forward and a subsequent backward stroke of the piston, the specific volume being equal to the volume covered by each stroke of the piston, or alternatively, wherein the pressurization system includes a housing and a rotating member operating within the housing, each operating cycle including a 360 degree rotation of the rotating member, the specific volume being equal to the volume covered by the rotating member during the 360 degree rotation. Valves, membrane pumps, rotors or doors may be used to enclose the specific volume of gas per operating cycle of the pressurization system of the beverage dispensing system. The specific volume of gas per operating cycle of the pressurization system of the beverage dispensing system should be compressed to the pressure of the first inner volume prior to or during entry into the inner volume. The gas is typically air.

The above together with numerous other objects, which will be evident from the below detailed description of the present invention, are in accordance with a fourth aspect according to the present invention obtained by a combined calibration and dispensing method, the method comprising the steps of:

    providing a beverage dispensing system, the beverage dispensing system comprising a pressure chamber having a removable lid and defining a first inner volume, the pressure chamber being fluidly connected to a pressurization system, the pressurization system being capable of supplying a specific volume of gas per operating cycle of the pressurization system to the first inner volume of the pressure chamber, the pressure chamber further having a pressure sensor for sensing the pressure of the first inner volume of the pressure chamber,
    providing a collapsible beverage container, the collapsible beverage container including a second inner volume of beverage, the second inner volume being smaller than the first inner volume, the beverage preferably being a carbonated beverage such as beer or soft drink,
    opening the lid, introducing the beverage container into the first inner volume of the pressure chamber and closing the lid,
    increasing the pressure value from a predetermined low pressure value to a predetermined high pressure value by using the pressurization system,
    dispensing the second inner volume of beverage from the collapsible beverage container by using the beverage dispensing system while maintaining the high pressure value within the first inner volume by using the pressurization system,
    determining the number of operating cycles defining the sum of operating cycles of the pressurization system used for dispensing the second inner volume of beverage, and
    establishing a measure of the specific volume of gas per operating cycle of the pressurization system of the beverage dispensing system by using the predetermined high pressure value, the second inner volume and the number of operating cycles.

It is evident that the volume of gas per operating cycle of the pressurization system will slowly decrease over time due to the degradation of the pressurisation system over time. The above alternative mode of establishing the measure of the specific volume of gas per operating cycle of the pressurization system may be used for performing a self calibration in order to eliminate the influence of wear of the pressurization system.

When a new collapsible beverage container has been introduced into the pressure chamber, the lid has been closed and the pressure in the pressure chamber has been increased to the high pressure value, the system is operational, i.e. ready for performing beverage dispensing operations. When the beverage container has been fully collapsed, i.e. the entire beverage has been dispensed, and the pressure in the pressure chamber has been returned to the high pressure value, the inner volume of beverage from the collapsible beverage container has been replaced by pressurized gas from the pressurization system. By measuring the total number of operating cycles used between the first dispensing operation of a new beverage container and the return of the high pressure value after the final dispensing operation when the beverage container is empty, the volume of gas per operating cycle may be derived. Preferably, the pressure is held approximately constant at the high pressure value in-between dispensing operations and any operating cycles performed in-between dispensing operation, e.g. to compensate for leakage of the pressure chamber, may be removed from the measure of the total number of operating cycles. In this way, the measure of the total number of operating cycles will correspond to the total number of operating cycles performed by the pressurization system for replacing the second inner volume of beverage by pressurized gas being pressurized to the high pressure value.

A measure of the specific volume of gas per operating cycle may thus be derived from the high pressure value, the second inner volume and the number of operating cycles. This measure may be stored and the degradation of the pressurization system may be monitored over time. After certain degradation, e.g. by 50%, the user may be notified that the pressurization system should be replaced or overhauled.

Brief description of the drawings

Figure 1A is a vertical sectional view of a beverage dispensing system according to the present invention in an open state.
Figure 1B is a vertical sectional view of a beverage dispensing system according to the present invention in a closed state.
Figure 1C is a vertical sectional view of a beverage dispensing system according to the present invention in a beverage dispensing state.
Figure 1D is a vertical sectional view of a beverage dispensing system according to the present invention in a pressure-restoring state during non-beverage dispensing.
Figure 1E is a vertical sectional view of a beverage dispensing system according to the present invention in a pressure-restoring state during non-beverage dispensing.
Figure 2 is a vertical sectional view of a further embodiment of a beverage dispensing system according to the present invention in a dispensing and pressure-restoring state.
Figure 3 is a vertical sectional view of yet a further embodiment of a beverage dispensing system according to the present invention in a dispensing state.
Figure 4A is a perspective view of a further embodiment of a beverage dispensing system according to the present invention.
Figure 4B is a perspective view of a yet further embodiment of a beverage dispensing system according to the present invention.
Figure 5 is a plot of the number of operational cycles over the volume in litres of air introduced into the beverage dispensing system.

Detailed description of the drawings

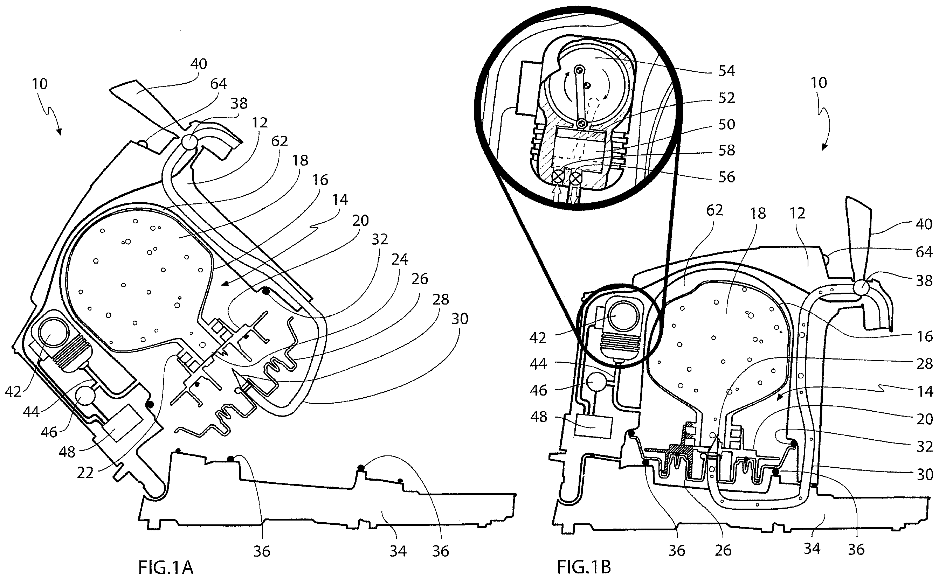

Fig. 1A is a vertical sectional view of a beverage dispensing system 10. The beverage dispensing system 10 comprises a housing 12 and a first inner volume 14 constituting a pressure chamber. The first inner volume 14 is typically chilled by a cooling element (not shown). The first inner volume 14 contains a flexible beverage container 16 filled with a second inner volume of carbonated beverage 18. The beverage container 16 is fixated to a base plate 20 of rigid plastic by e.g. click-fit to a set of flanges 22 of the beverage container 16. The beverage container 16 comprises an outlet 24 which is initially sealed by a pierceable membrane at the base plate 20. The base plate 20 of the beverage container 16 is fixated to the housing 12 by a base part 26. The base part 26 comprises a piercing element 28 which is in fluid communication with a dispensing line 30. When a new beverage container 16 is installed, the base part 26 is juxtaposing the base plate 20 of the beverage container 16 such that the beverage outlet 24 is pierced by the piercing element 28 and the dispensing line 30 is put in fluid communication with the beverage 18. The base part 26 is releasably connected to the housing 12, e.g. by a snap-fit or screw fit. When connected to the housing 12, the base part 26 applies a force onto the base plate 20, thereby fixating the beverage container 16 onto the housing 12 in a stable and secure way. A seal 32 seals the base part 26 onto the housing 12. The housing further comprises a base unit 34 for sealing off the first inner volume 14. The base unit 34 includes a drip tray. During the installation of the beverage container 16, the housing 12 is pivoted away from the base unit 34 for allowing the base part 26 to be removed and a beverage container 16 to be introduced into the first inner volume 14 of the housing 16. The base unit 34 seals to the housing 12 by further seals 36.

The dispensing line 30 transports the beverage 18 from the inside of the beverage container 16 to a tapping valve 38 located outside the first inner volume 14. The tapping valve 38 is controlled by a tapping handle 40. The tapping valve 38 controls the flow of beverage 18 to the outside of the housing 12. The housing 12 further comprises a pressurization system 42, which may be a pump or a compressor. The pressurization system 42, which will be described in more detail in connection with Fig. 1B, communicates with a channel 44 leading into the first inner volume 14 of the housing 12. The channel 44 further communicates with an electronic sensor or pressure switch 46 for measuring the pressure inside the first inner volume 14. The beverage dispensing system 10 further comprises a calculation unit 48. The calculation unit 48 is connected to the electronic sensor or pressure switch 46 and the pressurization system 42. The calculation unit 48 receives information about the pressure inside the first inner volume 14 and starts the pressurization of the first inner volume 14 in case the pressure in the first inner volume 14 is below a predetermined minimum dispensing pressure, such as e.g. 1.4 bar or 1.6 bar. The calculation unit 48 further receives information about whether or not a beverage container 16 is installed in the first inner volume 14 and whether or not the housing 12 is pivoted into its open position, or if it is closed and sealed onto the base unit 34. In case no beverage container is installed into the first inner volume 14 or in case the housing 12 is pivoted into its open position, the first inner volume 14 cannot be pressurized. Preferably, the calculation unit 48 also receives information whether or not the tapping handle 40 is in its vertical, non-dispensing orientation. In case the tapping handle is shifted to its horizontal, beverage dispensing orientation, i.e. allowing beverage to flow out, the volumetric measurement will be influenced, and thus it is preferred that the inner volume is pressurized while the tapping handle 40 is in its vertical orientation, i.e. preventing beverage from flowing out. In alternative embodiments it may be actively prevented to swing the tapping handle 40 when the pressurization system 42 is activated.

Fig. 1B is a vertical sectional view of the beverage dispensing system 10 when the first inner volume 14 is pressurized. The housing 12 has consequently been pivoted back to its closed position and the first inner volume 14 has been sealed by the base part 26 and the base unit 34. The surface of the beverage container 16 has been slightly deformed due to the pressure in the inner volume. Typically, the maximum pressure inside the first inner volume 14 is about 2 bar, such as 1.8 bar, absolute pressure in order to have a suitable pressure for achieving a suitable beverage flow without too much foaming of the beverage.

In the present view some more details of the pressurization system 42 are shown in the close-up part of the figure. The pressurization system 42 comprises an inner cylindrical cavity 50 in which a piston 52 is reciprocating. The piston 52 and the inner surface of the cylindrical cavity 50 form a tight fit. The piston is connected to a flywheel 54 which is driven by an electrical motor (not shown). The electrical motor is preferably connected to a mains electrical outlet. The electrical motor is controlled by the calculation unit 48. When the pressure in the first inner volume 14 decreases below the minimum dispensing pressure, the electrical motor (not shown) is activated to turn the flywheel as shown by the arrows. Each turn of the flywheel constitutes an operational cycle of the pressurization system 42 in which the piston travels from a top position a specific length *L* downwardly to a bottom position adjacent the bottom of the inner cavity 50 and again the same distance *L* upwardly to the top position. The words bottom, top, upwardly and downwardly should be interpreted in the context of the figure. It is contemplated that a pressurization system as shown in Fig. 1B may run in an arbitrary direction. The inner cavity 50 comprises a first one-way valve 56, allowing a flow of pressurized air to flow from the bottom of the inner cavity 50 into the first inner volume 14 when the piston 52 is travelling downwardly, while preventing flow of air in the opposite direction. The inner cavity 50 further comprises a second one-way valve 58, allowing a flow of pressurized air to flow from the outside of the beverage dispensing system 10 into the inner cavity 50 when the piston 52 is travelling upwardly, while preventing flow of air in the opposite direction. Each operational cycle of the pressurization system 42 will thus pressurize and introduce a predetermined volume of air of atmospheric pressure into the first inner volume 14. The specific volume of air $V_{spec}$ of atmospheric pressure introduced by each operational cycle may be calculated as:

$$V_{spec} = A_{spec} \cdot L_{spec}$$

wherein $A_{spec}$ is the area of the piston and $L_{spec}$ is the length between the top position of the piston and the bottom position of the piston. A volumetric measurement is performed each time the pressure is increased from 1.6 bar in the pressure chamber to 1.8 bar in the pressure chamber as further described below.

The flywheel 54 is connected to the calculation unit 48. The calculation unit 48 thereby receives information about the number of operational cycles performed by the pressurization system 42. During pressurization of the first inner volume 14, the number of operating cycles required to increase the pressure from the low pressure value = 1.6 bar to the high pressure value = 1.8 bar is stored in the calculation unit 48. Since beverage is a liquid and consequently substantially non-compressible, and the outside pressure is determined to be one bar, the total volume of beverage $V_{bev}$ remaining in the beverage container may be calculated according to the ideal gas law as:

$$V_{bev} = V_{in} - \frac{n_{op} \cdot V_{spec}}{p_{high} - p_{low}}$$

wherein $V_{in}$ is the volume of the inner volume, $V_{spec}$ of atmospheric pressure introduced by each operational cycle, $n_{op}$ is the number of operation cycles performed between reaching $p_{low}$ = 1.6 bar in the pressure chamber and reaching $p_{high}$, = 1.8 bar in the pressure chamber. The measurement is absolute, i.e. it is thus not necessary to know the initial volume of beverage in the beverage container 16 before installing it into the first inner volume 14. It is understood that the volume of air of atmospheric pressure $v_{spec}$ will compress as it is entering the first inner volume 14, which typically has a higher pressure compared to the outside of the first inner volume 14.

The above calculation of $V_{spec}$ will of course only be feasible during design of the system and not each time before installing a beverage container at the user location. As the initial volume of beverage in the beverage container is known, the above equation for calculating the remaining volume of beverage may be reformulated to calculate the specific volume of air $V_{spec}$ of atmospheric pressure introduced by each operational cycle:

$$V_{spec} = \frac{(p_{high} - p_{low})(V_{in} - V_{bev})}{n_{op}}$$

wherein $p_{low}$ is the predetennined low pressure value, $p_{high}$ is the predetermined high pressure value, $V_{in}$ is the volume of the first inner volume, $V_{bev}$ is the volume of the second inner volume, and $n_{op}$ is the number of operational cycles of the pressurization system. $V_{bev} = V_{in} - \frac{n_{op} \cdot V_{spec}}{p_{high} - p_{low}}$ This equation is thus used for recalibrating the system each time a new beverage container of known volume is installed into the pressure chamber.

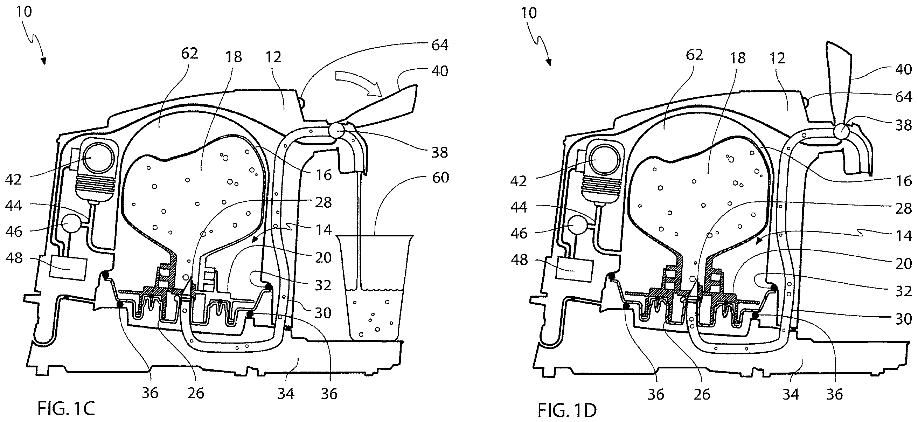

Fig. 1C is a vertical sectional view of the beverage dispensing system 10 during dispensing. When the handle 40 is swung from its initial vertical orientation towards a horizontal orientation, the tapping valve 38 will open and beverage 18 will start to flow though the valve 38 to the outside of the beverage dispensing system 10. Preferably, a glass 60 is then positioned below the tapping valve 38 to receive the beverage 18. The beverage 18 is driven through the dispensing line 30 by the pressure in the first inner volume 14. The surface of the beverage container 16 has been moderately deformed due to the pressure in the first inner volume 14 and the out-flowing beverage. The beverage container 16 keeps its upright position during the dispensing. The beverage container 16 will deform due to the pressure of the inner volume and the out-flowing beverage 18, and at least the upper part of the beverage container 16 will be compressed into a more or less random shape. The deformation of the beverage container 16 will result in the establishment of a residual air volume 62 above the beverage container 16. As the beverage container 16 collapses, the air volume 62 will increase. The pressure in the air volume 62 should be higher than the ambient pressure outside the beverage dispensing system 10, thereby pushing the beverage through the dispensing line 30 when the tapping valve 38 is shifted to an open position. The beverage container 16 is preferably made of PET, a flexible material which will deform as the beverage volume is reduced, until the beverage 18 is completely drained.

Fig. 1D shows the beverage dispensing system 10 when the pressurization system 42 is reactivated after dispensing. In case the pressure in the first inner volume 14 has decreased below 1.6 bar, the pressurization system 42 is reactivated and the pressure in the first inner volume 14 is increased to 1.8 bar, and a new volumetric measurement is performed as described above. In this way a new measurement is made essentially after each dispensing operation for an accurate updating of the amount of beverage 18 remaining in the beverage container without any cumulative errors. Further, the beverage dispensing system 10 may compensate for any leakage by re-pressurizing the first inner volume 14 each time the pressure decreases below 1.6 bar, at which time a new volumetric measurement is performed as described above.

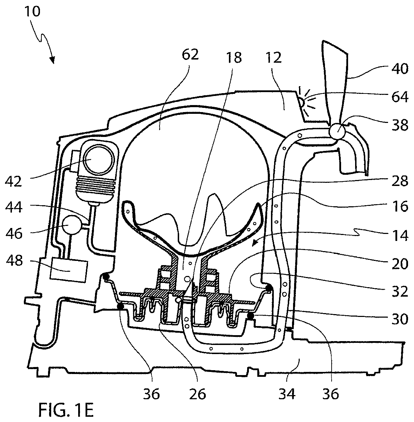

Fig. 1E shows the beverage dispensing system 10 when the beverage 18 is nearly emptied out and the beverage container 16 has been almost completely deformed. The user is then, before the beverage container is completely empty, alerted by a visual indication 64 which may be e.g. a flashing lamp. The user may then introduce a new beverage container by pivoting the housing 12 of the beverage dispensing system 10 and removing the base part 26.

It should be noted that in case the re-pressurization of the first inner volume 14 is performed quickly in relation to the dispensing of beverage, i.e. if the volume of pressurized air introduced per second by the pressurization system is large compared to the volume of beverage dispensed per second, re-pressurization and volumetric measurements may be performed irrespective of beverage dispensing. However, in case the re-pressurization is comparable to or slower than the dispensing of beverage, i.e. if the volume of pressurized air introduced per second by the pressurization system is less than or substantially equal to the volume of beverage dispensed per second, the beverage dispensing will influence the volumetric measurement.

In the present embodiment, the number of operating cycles is determined by the number of turns of the flywheel 54 (shown in Fig. 1B). The number of turns may be determined e.g. by the use of electrical contacts, optical detectors, proximity detectors, hall detectors, etc. Other alternative ways of determining the number of operating cycles include determining the number of turns of the electrical motor, determining the number of strokes of the piston 52 (shown in Fig. 1B) and determining the number of pressure pulses received at the electronic sensor or pressure switch 46.

In the present embodiment, it is assumed that the temperature inside the first inner volume 14 is kept at a constant low temperature of about 5 degrees C. In the formulas presented here, the temperature effect causing a reduced pressure when the temperature is reduced at constant volume has been neglected. The cooling of the outside air, presumably at room temperature, will cause a measurement error of a few percent. The calculation unit may compensate for this error for a more precise volumetric measurement.

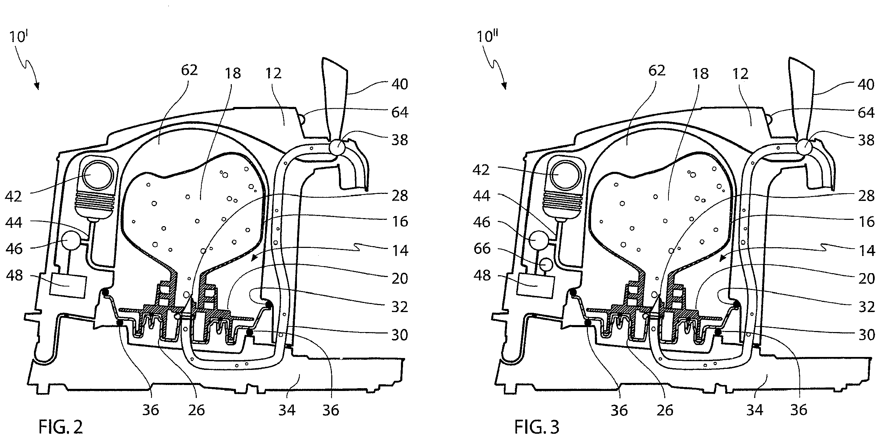

It is contemplated that the above method may be used in reverse in order to dispense a predetermined volume of beverage instead of measuring the volume of beverage remaining. Fig. 2 shows an alternative embodiment of the beverage dispensing system 10'. The alternative embodiment of the beverage dispensing system 10' includes all of the features of the previous presented embodiment of Fig. 1A-E, but further allows re-pressurization of the first inner volume 14 by using the pressurization system 42 simultaneously with dispensing beverage by swinging the handle 40, even in case the re-pressurization is comparable to or slower than the dispensing of beverage. In the event the tapping handle 38 is swung from the vertical orientation to the horizontal position, i.e. allowing beverage to be dispensed, the pressurization system 42 may be configured to allow the pressure to decrease to 1.6 bar, after which the pressure, if possible, is kept constant. The volume of beverage $V_{bev}$ remaining in the beverage container 16 may during the dispensing operation be calculated by making a calculation relative to a previous determination of the remaining volume of beverage according to the ideal gas law:

$$V_{bev} = V_{bev\_old} - \frac{p_{high} \cdot (V_{in} - V_{bev\_old})}{p_{low}} \cdot - \frac{V_{spec}}{p_{low}}$$

wherein the first term $V_{bev\_old}$ is the previously determined volume of the beverage 18 remaining in the beverage container 16, the second term $\frac{p_{high} \cdot (V_{in} - V_{bev\_old})}{p_{low}}$ represents the increase of the air volume in the pressure chamber during dispensing and non-operation of the pressurization system 42, and the third term $\frac{n_{op} \cdot V_{spec}}{p_{low}}$ represents the volume of the dispensed beverage during dispensing and pressure held constant by the pressurization system 42. The calculation according to the above-mentioned formula may be used e.g. in case the tapping handle 40 is swung during re-pressurization or in the event that the pressure inside the pressure chamber falls below 1.6 bar, e.g. 1.4 bar. The above method has the drawback that the result depends on the previously determined volume of the beverage container, i.e. cumulative errors may occur. After the dispensing operation is finished, an absolute measurement as described above in connection with Figs. 1A-E should therefore be performed.

It is understood that a relative measurement of the volume of remaining beverage as described above may also be performed when the tapping valve 38 is in the non-beverage dispensing position as a complement to the absolute volume measurement. It should, however, be remembered that the relative measurement as described here does not take into account the effect of leakage of air from the pressure chamber.

Fig. 3 shows an alternative embodiment of the beverage dispensing system 10" in which the number of operation cycles is determined by the time of operation of the pressurization system 42. In case the pressurization system is capable of supplying a constant flow of air independent of the pressure in the first inner volume 14, and start-up/shut-down effects of the electrical motor (not shown) may be neglected, the volume of air of atmospheric pressure pressurized and introduced into the first inner volume 14 is directly proportional to the time during which the electrical motor of the pressurization system 42 is activated. Thus, a clock 66 connected to the calculation unit 48 and to the electrical motor (not shown) may be used to determine the volume of air introduced into the first inner volume 14. The clock 66 is reset and started when the pressurization system 42 is started, and the clock is stopped when the pressurization system 42 is stopped, and the volume of air of atmospheric pressure pressurized and introduced into the first inner volume 14 is calculated based on the time measured by the clock 66.

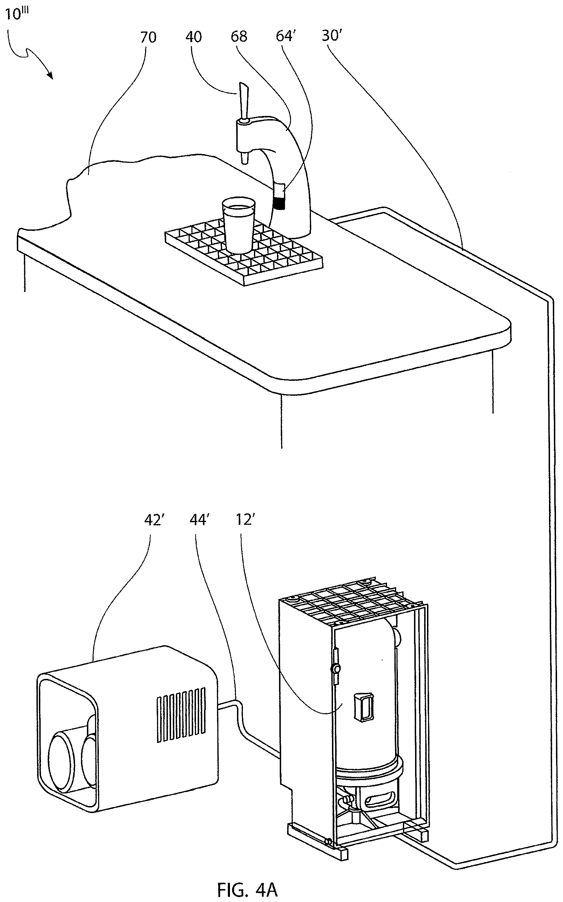

Fig. 4A shows a further embodiment of a beverage dispensing system 10''' according to the present invention. The present embodiment constitutes a professional modular system in which a housing 12' for accommodating the beverage container (not shown) is located at a distant location in relation to a tapping rod 68 in which a tapping valve (not shown) is included. The tapping rod 68 is located on a bar counter 70 situated in a pub, bar, restaurant, party room or the like. The tapping valve (not shown) inside the tapping rod 68 is controlled by a handle 40. A dispensing line 30' interconnects the tapping valve (not shown) of the tapping rod 68 and the housing 12'. The housing 12' may be located in a location not accessible to the public such as in a basement, kitchen, backroom or the like. The housing 12' includes an inner chamber (not shown) for accommodating the beverage container (not shown). The inner chamber (not shown) of the housing 12' is connected to a pressurization system 42' via a channel 44'. The pressurization system 42', which may be a larger variant of the pressurization system 42 described above, is capable of introducing a specific volume or air into the inner space (not shown) of the housing 12' per operational cycle. The pressure inside the inner space (not shown) of the housing 12' is measured by an electronic sensor or pressure switch or the like. The calibration and volumetric measurement is then performed as described above. The remaining amount of beverage inside the beverage container (not shown) of the housing 12' may be displayed on a visual indicator 64' on the tapping rod 68'. The above dispensing system is as such known from the applicant's previous patent applications, e.g. WO2009/024147.

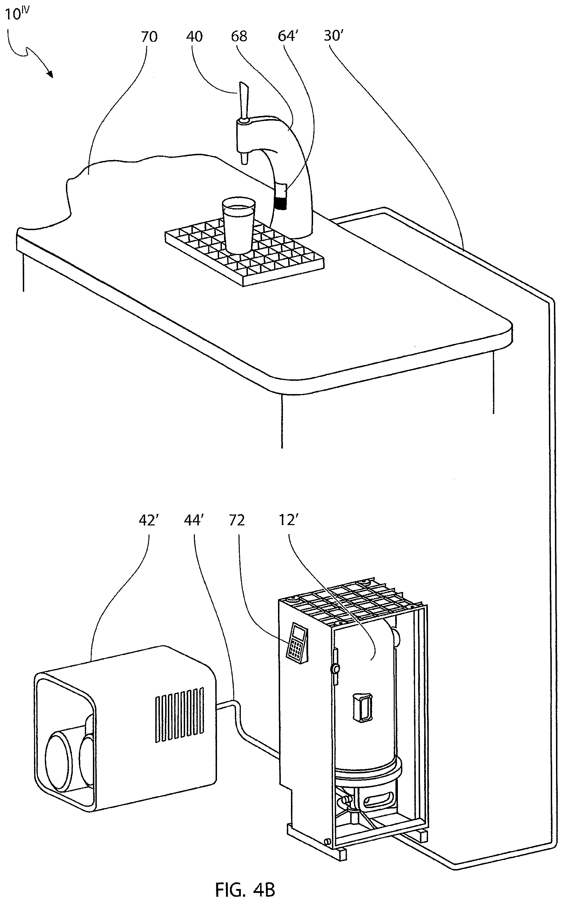

Fig. 4B shows a further embodiment of a beverage dispensing system $10^{iv}$ according to the present invention. The beverage dispensing system $10^{iv}$ is very similar to the beverage dispensing system 10''' of the previous figure 4A except that is includes a keyboard 72 for entering data such as the $p_{low}$ predetermined low pressure value, $p_{high}$ predetermined high pressure value, $V_{in}$ the volume of the first inner volume taking account for the solid walls of the beverage container, and $V_{bev}$ the inital volume of the second inner volume.

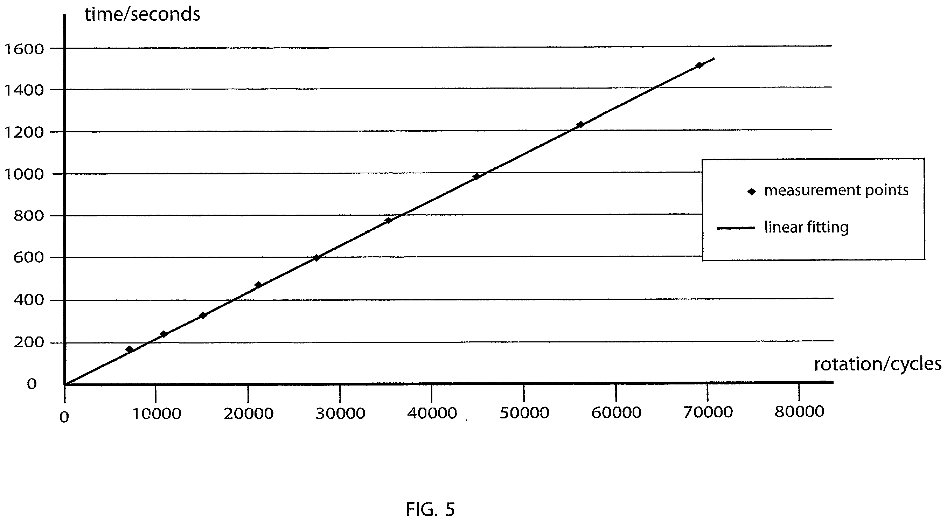

Fig. 5 shows tables and a plot of the number of operational cycles (r=revolutions) of the pressurization system as a function of the volume of air (litres) introduced into the inner volume. The applicant has performed extensive experiments to determine that there is a linear relationship between the number of operational cycles of the pressurization system and the volume of air (in litre) introduced into the inner volume of the beverage dispensing system. The results of the experiments are shown in tables 1 and 2 and in the plot of fig 5.

Table 1

| r | litre m | litre c | diff |
|---|---|---|---|
| 1171 | 0,35 | 0,32 | 0,03 |
| 882 | 0,3 | 0,24 | 0,06 |
| 1012 | 0,3 | 0,28 | 0,02 |
| 1036 | 0,3 | 0,28 | 0,02 |
| 1189 | 0,35 | 0,33 | 0,02 |
| 1272 | 0,4 | 0,35 | 0,05 |
| 1405 | 0,4 | 0,39 | 0,01 |
| 1567 | 0,45 | 0,43 | 0,02 |
| 1749 | 0,5 | 0,48 | 0,02 |
| 1848 | 0,55 | 0,51 | 0,04 |
| 1948 | 0,6 | 0,54 | 0,06 |
| 2066 | 0,6 | 0,57 | 0,03 |
| 2364 | 0,65 | 0,65 | 0 |
| 2456 | 0,75 | 0,68 | 0,07 |
| 2660 | 0,75 | 0,73 | 0,02 |
| 2600 | 0,8 | 0,72 | 0,09 |
| 3151 | 0,8 | 0,87 | -0,07 |
| 3666 | 0,95 | 1,01 | -0,06 |
| 4549 | 1,1 | 1,25 | -0,15 |
| 4900 | 1,35 | 1,35 | 0 |
| 5551 | 1,4 | 1,53 | -0,13 |
| 6001 | 1,6 | 1,65 | -0,05 |
| 6501 | 1,7 | 1,79 | -0,09 |
| 6888 | 1,85 | 1,89 | -0,04 |
| 68432 | 18,8 | 18,82 | -0,02 |

Table 2

| r | litre m | litre c | diff |
|---|---|---|---|
| 1042 | 0,3 | 0,29 | 0,01 |
| 907 | 0,3 | 0,25 | 0,05 |
| 972 | 0,3 | 0,27 | 0,03 |
| 1071 | 0,3 | 0,29 | 0,01 |
| 1166 | 0,35 | 0,32 | 0,03 |
| 1276 | 0,35 | 0,35 | 0 |
| 1371 | 0,4 | 0,38 | 0,02 |
| 1396 | 0,45 | 0,38 | 0,07 |

(continued)

| r | litre m | litre c | diff |
|---|---|---|---|
| 1410 | 0,45 | 0,39 | 0,06 |
| 1610 | 0,5 | 0,44 | 0,06 |
| 1931 | 0,55 | 0,53 | 0,02 |
| 1767 | 0,6 | 0,49 | 0,11 |
| 2201 | 0,6 | 0,61 | -0,01 |
| 2000 | 0,7 | 0,55 | 0,15 |
| 2249 | 0,7 | 0,62 | 0,08 |
| 2450 | 0,75 | 0,67 | 0,08 |
| 2827 | 0,8 | 0,78 | 0,02 |
| 2581 | 0,85 | 0,71 | 0,14 |
| 2827 | 0,85 | 0,78 | 0,07 |
| 3522 | 0,95 | 0,97 | -0,02 |
| 2849 | 1,1 | 0,78 | 0,32 |
| 3731 | 0,95 | 1,03 | -0,08 |
| 4543 | 1,1 | 1,25 | -0,15 |
| 4802 | 1,35 | 1,32 | 0,03 |
| 6275 | 1,45 | 1,73 | -0,28 |
| 6458 | 1,75 | 1,78 | -0,03 |
| 65234 | 18,75 | 17,94 | 0,81 |

The pressurization system is provided with a calculation unit for determining the number of operating cycles or revolutions. The tables show the number of operating cycles (r=revolutions), the measured volume of air introduced into the first inner volume (litre m=measured value), the calculated volume of air introduced into the first inner volume (litre c=calculated value) and the difference (diff) between measured value and calculated value. The plot shows the number of operational cycles of the pressurization system as a function of the volume of air (in litre). The points represent experimental results and the line is a curve which has been linearly fitted to the experimental results. From the plot it can be seen that the relationship between the number of operational cycles of the pressurization system and the volume of air introduced into the first inner volume of the beverage dispensing system is substantially linear. It has thereby been found out that each revolution of the pressurization system introduced 0,275ml of air of atmospheric pressure into the first inner volume. The experiment has been performed using a 20 litres beverage container while tapping approximately 2 litres of beverage.

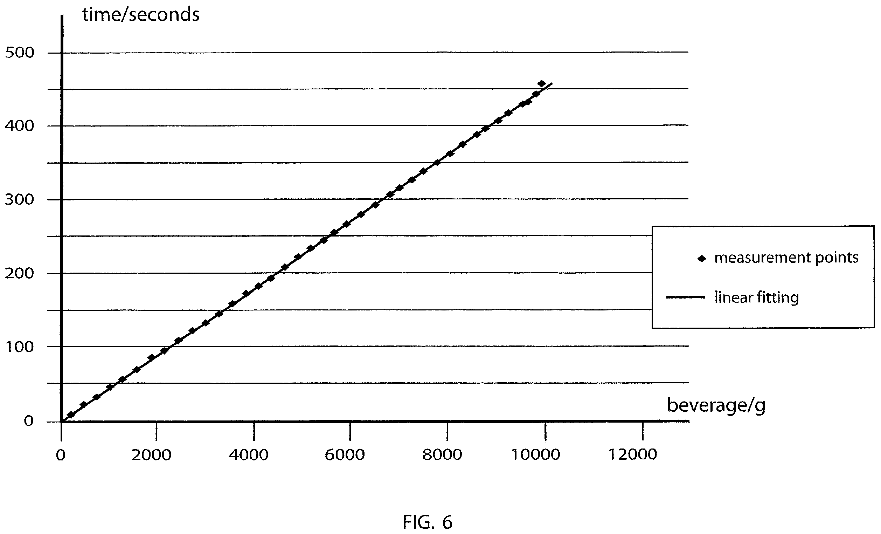

Fig 6 shows tables and a plot of the time of operation of the pressurization system as a function of the amount of beverage having been dispensed from the beverage disposing system. The applicant has performed extensive experiments to determine that there is also a linear relationship between the time of operation of the pressurization system and the mass of beverage having been dispensed from the beverage dispensing system.

Although the present invention has been described above with reference to specific embodiments of the method for determining a volume of beverage and also specific embodiments of the beverage dispensing system, it is of course contemplated that numerous modifications may be deduced by a person having ordinary skill in the art of beverage dispensing. For instance, the housing and the flexible container may be replaced by a bag-in-bag, bag-in-keg or bag-in-container including a rigid or flexible outer casing and a flexible inner bag. The inner space is thereby established between the outer casing and the inner bag. Similar kegs have been produced and sold by various companies which are active within the field of beverage dispensing. Other variants of the above technology exist, such as a metallic can or container with an internal plastic bag, or even an inner flexible metallic bag. Further, the container may or may not include an ascending pipe, and the container may be used in an horizontal, vertical, sloped or upside down orientation when being tapped.

Such modifications, which are readily deducible by the skilled person, are to be construed as part of the present invention as defined in the appending claims.

**Claims**

1. A calibration method, said method comprising the steps of:

   providing a beverage dispensing system (10), said beverage dispensing system comprising a pressure chamber (12) having a removable lid and defining a first inner volume (14), said pressure chamber (12) being fluidly connected to a pressurization system (42), said pressurization system (42) being capable of supplying a specific volume of gas per operating cycle of said pressurization system to said first inner volume (14) of said pressure chamber (12), said pressure chamber (12) further having a pressure sensor (46) for sensing the pressure of said first inner volume (14) of said pressure chamber (12), providing a collapsible beverage container (16), said collapsible beverage container (16) including a second inner volume of beverage (18), said second inner volume being smaller than said first inner volume (14), said beverage preferably being a carbonated beverage such as beer, soft drink or wine, opening said lid, introducing said beverage container (16) into said first inner volume (14) of said pressure chamber (12) and closing said lid,

   increasing said pressure value from a predetermined low pressure value to a predetermined high pressure value by using said pressurization system,
   determining the number of operating cycles defining the sum of operating cycles of said pressurization system used for raising said pressure value from said predetermined low pressure value to said predetermined high pressure value, and
   establishing a measure of said specific volume of gas per operating cycle of said pressurization system of the beverage dispensing system by using said predetermined low pressure value, said predetermined high pressure value, said first inner volume, said second inner volume and said number of operating cycles.

2. The method according to claim 1, wherein said measure of said specific volume of gas per operating cycle is established by:

   calculating a product by multiplying the difference between said predetermined high pressure value and said predetermined low pressure value, and the difference between said first inner volume and said second inner volume, and dividing said product and said number of operating cycles.

3. The method according to any of the preceding claims, wherein the number of operating cycles is determined by measuring the time during which said operating cycles are performed, or, alternatively, wherein said pressurization system is driven by an electrical motor, the number of operating cycles is determined by measuring the number of revolutions of said electrical motor during which said operating cycles are performed, or, yet alternatively, wherein said pressurization system comprises a reciprocating piston, the number of operating cycles is determined by measuring the number of pressure fluctuations occurring within said inner volume when said pressurization system is activated, or, further alternatively, wherein said pressurization system is driven by an electrical motor and said pressurization system comprises a reciprocating piston, the number of operating cycles is determined by measuring the number of current peaks in the supply current of said electrical motor.

4. The method according to any of the preceding claims, wherein said predetermined low pressure value is in the order of 1.4-1.6 bar, such as 1.5 bar, and, said predetermined high pressure value is in the order of 1.6-1.8 bar, such as 1.7 bar.

5. The method according to any of the preceding claims, wherein said second inner volume (18) is between 10 litres and 10.1 litres.

6. The method according to any of the preceding claims, wherein said predetermined low pressure value, and/or said predetermined high pressure value, and/or said second inner volume are entered using an input device of said beverage dispensing system.

7. The method according to any of the preceding claims, wherein said first inner volume (14) is compensated by the volume of the plastic material used for the container (16).

8. The method according to any of the preceding claims, said method further including the step of presenting a visual indication being visible from the outside of said beverage dispensing system of measure of said specific volume of gas per operating cycle.

9. The method according to any of the preceding claims, wherein said first inner volume ranges between 5 litres and 50 litres, such as 5-10 litres, 10-20 litres, 20-30 litres, 30-40 litres, or 40-50 litres.

10. The method according to any of the preceding claims, wherein said method further comprises the steps of:

measuring a time unit representing the time required for raising said pressure from said predetermined low pressure value to said predetermined high pressure value, and
establishing a measure of said specific volume of gas per time unit of operation of the pressurization system of the beverage dispensing system by using said predetermined low pressure value, said predetermined high pressure value, said first inner volume, said second inner volume, and said time unit.

11. A method for determining a residual volume of beverage, said method comprising performing said calibration method according to any of the preceding claims, and further performing the following steps in response to detecting said low pressure value of said first inner volume (14):

increasing said pressure in said first inner volume (14) from said low pressure value to said high pressure value by using said pressurization system (42), determining the number of operating cycles defining the sum of operating cycles of the pressurization system (42) used for raising said pressure value from said predetermined low pressure value to said predetermined high pressure value, and

establishing a measure of said residual volume of beverage included in said collapsible beverage container (16), said measure being based on said specific volume of gas per operating cycle of said pressurization system (42), said first inner volume (14), said predetermined low pressure value and said predetermined high pressure value.

12. The method according to claim 11, further comprising the step of performing a re-calibration by establishing a measure of said specific volume of gas per operating cycle of said pressurization system of said beverage dispensing system by using said predetermined low pressure value, said predetermined high pressure value, said first inner volume, said second inner volume and said number of operating cycles

13. A beverage dispensing system (10), said beverage dispensing system comprising:

a pressure chamber (12) having a removable lid and defining a first inner volume (14) for receiving a collapsible beverage container (16), said collapsible beverage container including a second inner volume of beverage (18), said second inner volume being smaller than said first inner volume (14), said beverage preferably being a carbonated beverage such as beer or soft drink, a pressurization system (42) fluidly connected to said pressure chamber (12), said pressurization system (42) being capable of supplying a specific volume of gas per operating cycle of said pressurization system to said first inner volume of said pressure chamber (12), said pressurization system (42) being capable of increasing said pressure value from a predetermined low pressure value to a predetermined high pressure value,
a pressure sensory (46) for sensing a pressure value corresponding to the absolute pressure of said first inner volume of said pressure chamber, a calculation unit (48) for determining a number of operating cycles defining the sum of operating cycles of the pressurization system used for raising said pressure value from said predetermined low pressure value to said predetermined high pressure value, and

**characterised in that** the beverage dispensing system comprises
a processing unit for establishing a measure of said specific volume of gas per operating cycle of the pressurization system (42) of the beverage dispensing system (10) by using said predetermined low pressure value, said predetermined high pressure value, said first inner volume, said second inner volume, and said number of operating cycles.

**14.** The system according to claim 13, wherein said pressurization system (42) includes a housing, a reciprocating piston (52) operating within said housing and a one-way valve, each operating cycle including a forward and a subsequent backward stroke of said piston (52), said specific volume being equal to said volume covered by each stroke of said piston, or alternatively, wherein said pressurization system (42) includes a housing and a rotating member operating within said housing, each operating cycle including a 360 degree rotation of said rotating member, said specific volume being equal to said volume covered by said rotating member during the 360 degree rotation.

**15.** A combined calibration and dispensing method, said method comprising the steps of:

> providing a beverage dispensing system (10), said beverage dispensing system comprising a pressure chamber (12) having a removable lid and defining a first inner volume (14), said pressure chamber (12) being fluidly connected to a pressurization system (42), said pressurization system being capable of supplying a specific volume of gas per operating cycle of said pressurization system to said first inner volume (14) of said pressure chamber (12), said pressure chamber further having a pressure sensor (46) for sensing the pressure of said first inner volume (14) of said pressure chamber,
> providing a collapsible beverages container (16), said collapsible beverage container including a second inner volume of beverage (18), said second inner volume being smaller than said first inner volume, said beverage preferably being a carbonated beverage such as beer or soft drink,
> opening said lid, introducing said beverage container into said first inner volume (14) of said pressure chamber and closing said lid,
> increasing said pressure value from a predetermined low pressure value to a predetermined high pressure value by using said pressurization system,
> dispensing said second inner volume of beverage (18) from said collapsible beverage container (16) by using said beverage dispensing system while maintaining said high pressure value within said first inner volume by using said pressurization system,
> determining the number of operating cycles defining the sum of operating cycles of said pressurization system used for dispensing said second inner volume of beverage, and
> establishing a measure of said specific volume of gas per operating cycle of said pressurization system of the beverage dispensing system by using said predetermined high pressure value, said second inner volume and said number of operating cycles.

**Patentansprüche**

**1.** Kalibrierverfahren, wobei das Verfahren die folgenden Schritte umfasst:

> Bereitstellen eines Getränkeausgabesystems (10), wobei das Getränkeausgabesystem eine Druckkammer (12) umfasst, die einen entfernbaren Deckel aufweist und ein erstes inneres Volumen (14) definiert, wobei die Druckkammer (12) mit einem Druckbeaufschlagungssystem (42) fluidisch verbunden ist, wobei das Druckbeaufschlagungssystem (42) dazu imstande ist, ein spezifisches Gasvolumen pro Betriebszyklus des Druckbeaufschlagungssystems zu dem ersten inneren Volumen (14) der Druckkammer (12) zuzuführen, wobei die Druckkammer (12) ferner einen Drucksensor (46) zum Erkennen des Drucks des ersten inneren Volumens (14) der Druckkammer (12) aufweist,
> Bereitstellen eines zusammenklappbaren Getränkebehälters (16), wobei der zusammenklappbare Getränkebehälter (16) ein zweites inneres Getränkevolumen (18) umfasst, wobei das zweite innere Volumen kleiner als das erste innere Volumen (14) ist, wobei das Getränk bevorzugt ein kohlensäurehaltiges Getränk wie zum Beispiel Bier, Erfrischungsgetränk oder Wein ist,
> Öffnen des Deckels, Einführen des Getränkebehälters (16) in das erste innere Getränkevolumen (14) der Druckkammer (12) und Schließen des Deckels,
> Erhöhen des Druckwerts von einem vorbestimmten Niederdruckwert auf einen vorbestimmten Hochdruckwert durch Verwendung des Druckbeaufschlagungssystems,
> Bestimmen der Anzahl von Betriebszyklen, welche die Summe von Betriebszyklen des Druckbeaufschlagungssystems definiert, das dazu verwendet wird, den Druckwert von dem vorbestimmten Niederdruckwert auf den vorbestimmten Hochdruckwert zu erhöhen, und
> Etablieren eines Maßes des spezifischen Gasvolumens pro Betriebszyklus des Druckbeaufschlagungssystems des Getränkeausgabesystems durch Verwendung des vorbestimmten Niederdruckwerts, des vorbestimmten Hochdruckwerts, des ersten inneren Volumens, des zweiten inneren Volumens und der Anzahl von Betriebszyklen.

**2.** Verfahren nach Anspruch 1, wobei das Maß des spezifischen Gasvolumens pro Betriebszyklus etabliert ist durch:

> Berechnen eines Produkts durch Multiplizieren des Unterschieds zwischen dem vorbestimmten Hochdruckwert und dem vorbestimmten Niederdruckwert, und des Unterschieds zwischen dem ersten inneren Volumen und dem zweiten inneren Volumen, und
> Teilen des Produkts und der Anzahl von Betriebszyklen.

3. Verfahren nach einem der vorstehenden Ansprüche, wobei die Anzahl von Betriebszyklen durch Messen der Zeit festgelegt wird, während welcher die Betriebszyklen durchgeführt werden, oder, alternativ, wobei das Druckbeaufschlagungssystem von einem elektrischen Motor getrieben wird, wird die Anzahl von Betriebszyklen durch Messen der Anzahl von Umdrehungen des elektrischen Motors bestimmt, während welcher die Betriebszyklen durchgeführt werden, oder, noch alternativ, wobei das Druckbeaufschlagungssystem einen Hubkolben umfasst, wird die Anzahl von Betriebszyklen durch Messen der Anzahl von Druckschwankungen bestimmt, die innerhalb des inneren Volumens auftreten, wenn das Druckbeaufschlagungssystem aktiviert wird, oder, ferner alternativ, wobei das Druckbeaufschlagungssystem von einem elektrischen Motor getrieben wird, und das Druckbeaufschlagungssystem einen Hubkolben umfasst, wird die Anzahl von Betriebszyklen durch Messen der Anzahl von Stromspitzen in dem Versorgungsstrom des elektrischen Motors bestimmt.

4. Verfahren nach einem der vorstehenden Ansprüche, wobei der vorbestimmte Niederdruckwert in der Größenordnung von 1,4-1,6 bar, wie zum Beispiel 1,5 bar, und, der vorbestimmte Hochdruckwert in der Größenordnung von 1,6-1,8 bar, wie zum Beispiel 1,7 bar liegt.

5. Verfahren nach einem der vorstehenden Ansprüche, wobei das zweite innere Volumen (18) zwischen 10 Liter und 10,1 Liter beträgt.

6. Verfahren nach einem der vorstehenden Ansprüche, wobei der vorbestimmte Niederdruckwert, und/oder der vorbestimmte Hochdruckwert, und/oder das zweite innere Volumen durch Verwendung eines Eingabegeräts des Druckbeaufschlagungssystems eingegeben werden.

7. Verfahren nach einem der vorstehenden Ansprüche, wobei das erste innere Volumen (14) durch das Volumen des für den Behälter (16) verwendeten Kunststoffmaterials ausgeglichen ist.

8. Verfahren nach einem der vorstehenden Ansprüche, wobei das Verfahren ferner den Schritt des Vorstellens einer visuellen Anzeige umfasst, die von außerhalb des Druckbeaufschlagungssystems des Maßes des spezifischen Gasvolumens pro Betriebszyklus sichtbar ist.

9. Verfahren nach einem der vorstehenden Ansprüche, wobei das erste innere Volumen zwischen 5 Liter und 50 Liter, wie zum Beispiel 5-10 Liter, 10-20 Liter, 20-30 Liter, 30-40 Liter, oder 40-50 Liter beträgt.

10. Verfahren nach einem der vorstehenden Ansprüche, wobei das Verfahren ferner die folgenden Schritte umfasst:

> Messen einer Zeiteinheit, welche die Zeit repräsentiert, die erforderlich ist, um den Druck von dem vorbestimmten Niederdruckwert auf den vorbestimmten Hochdruckwert zu erhöhen, und Etablieren eines Maßes des spezifischen Gasvolumens pro Zeiteinheit des Betriebs des Druckbeaufschlagungssystems des Getränkeausgabesystems durch Verwendung des vorbestimmten Niederdruckwerts, des vorbestimmten Hochdruckwerts, des ersten inneren Volumens, des zweiten inneren Volumens und der Zeiteinheit.

11. Verfahren zum Bestimmen eines Restgetränkevolumens, wobei das Verfahren die Durchführung des Kalibrierverfahrens nach einem der vorstehenden Ansprüche umfasst, und ferner die Durchführung der folgenden Schritte in Erwiderung zur Erfassung des Niederdruckwerts des ersten inneren Volumens (14):

> Erhöhen des Drucks in dem ersten inneren Volumen (14) von dem Niederdruckwert auf den Hochdruckwert durch Verwendung des Druckbeaufschlagungssystems (42), Bestimmen der Anzahl von Betriebszyklen, welche die Summe von Betriebszyklen des Druckbeaufschlagungssystems (42) definiert, das dazu verwendet wird, den Druckwert von dem vorbestimmten Niederdruckwert auf den vorbestimmten Hochdruckwert zu erhöhen, und Etablieren eines Maßes des Restgetränkevolumens, das in dem zusammenklappbaren Getränkebehälter (16) enthalten ist, wobei das Maß auf dem spezifischen Gasvolumen pro Betriebszyklus des Druckbeaufschlagungssystems (42), dem ersten inneren Volumen (14), dem vorbestimmten Niederdruckwert und dem vorbestimmten Hochdruckwert basiert ist.

12. Verfahren nach Anspruch 11, ferner umfassend den Schritt des Durchführens einer Neukalibrierung durch Etablieren eines Maßes des spezifischen Gasvolumens pro Betriebszyklus des Druckbeaufschlagungssystems des Getränkeausgabesystems durch Verwendung des vorbestimmten Niederdruckwerts, des vorbestimmten Hochdruckwerts, des ersten inneren Volumens, des zweiten inneren Volumens und der Anzahl von Betriebszyklen.

13. Getränkeausgabesystem (10), wobei das Getränkeausgabesystem umfasst:

eine Druckkammer (12), die einen entfernbaren Deckel aufweist und ein erstes inneres Volumen (14) zur Aufnahme eines zusammenklappbaren Getränkebehälters (16) definiert, wobei der zusammenklappbare Getränkebehälter ein zweites inneres Getränkevolumen (18) umfasst, wobei das zweite innere Volumen kleiner als das erste innere Volumen (14) ist, wobei das Getränk bevorzugt ein kohlensäurehaltiges Getränk wie zum Beispiel Bier oder Erfrischungsgetränk ist,

ein Druckbeaufschlagungssystem (42), das mit der Druckkammer (12) fluidisch verbunden ist, wobei das Druckbeaufschlagungssystem (42) dazu imstande ist, ein spezifisches Gasvolumen pro Betriebszyklus von dem Druckbeaufschlagungssystem (42) zu dem ersten inneren Volumen der Druckkammer (12) zuzuführen, wobei das Druckbeaufschlagungssystem (42) dazu imstande ist, den Druckwert von einem vorbestimmten Niederdruckwert auf einen vorbestimmten Hochdruckwert zu erhöhen.

einen Drucksensor (46) zum Erkennen eines Druckwerts entsprechend dem absoluten Druck des ersten inneren Volumens der Druckkammer,

eine Berechnungseinheit (48) zum Bestimmen einer Anzahl von Betriebszyklen, welche die Summe von Betriebszyklen des Druckbeaufschlagungssystems definiert, das dazu verwendet wird, den Druckwert von dem vorbestimmten Niederdruckwert auf den vorbestimmten Hochdruckwert zu erhöhen, und

**dadurch gekennzeichnet, dass** das Getränkeausgabesystem umfasst

eine Verarbeitungseinheit zum Etablieren eines Maßes des spezifischen Gasvolumens pro Betriebszyklus des Druckbeaufschlagungssystems (42) des Getränkeausgabesystems (10) durch Verwendung des vorbestimmten Niederdruckwerts, des vorbestimmten Hochdruckwerts, des ersten inneren Volumens, des zweiten inneren Volumens und der Anzahl von Betriebszyklen.

14. System nach Anspruch 13, wobei das Druckbeaufschlagungssystem (42) ein Gehäuse, einen Hubkolben (52) umfasst, der innerhalb des Gehäuses betrieben wird, und ein Einwegventil, wobei jeder Betriebszyklus einen Vorwärts- und einen folgenden Rückwärtshub des Kolbens (52) umfasst, wobei das spezifische Volumen gleich dem Volumen ist, das von jedem Kolbenhub gedeckt wird, oder alternativ, wobei das Druckbeaufschlagungssystem (42) ein Gehäuse und ein Drehglied umfasst, das innerhalb des Gehäuses betrieben wird, wobei jeder Betriebszyklus eine 360 Grad Drehung des Drehglieds umfasst, wobei das spezifische Volumen dem Volumen gleich ist, das von dem Drehglied während der 360 Grad Drehung gedeckt wird.

15. Kombiniertes Kalibrier- und Ausgabeverfahren, wobei das Verfahren die folgenden Schritte umfasst:

Bereitstellen eines Getränkeausgabesystems (10), wobei das Getränkeausgabesystem eine Druckkammer (12) umfasst, die einen entfernbaren Deckel aufweist und ein erstes inneres Volumen (14) definiert, wobei die Druckkammer (12) mit einem Druckbeaufschlagungssystem (42) fluidisch verbunden ist, wobei das Druckbeaufschlagungssystem dazu imstande ist, ein spezifisches Gasvolumen pro Betriebszyklus des Druckbeaufschlagungssystems zu dem ersten inneren Volumen (14) der Druckkammer (12) zuzuführen, wobei die Druckkammer ferner einen Drucksensor (46) zum Erkennen des Drucks des ersten inneren Volumens (14) der Druckkammer aufweist,

Bereitstellen eines zusammenklappbaren Getränkebehälters (16), wobei der zusammenklappbare Getränkebehälter ein zweites inneres Getränkevolumen (18) umfasst, wobei das zweite innere Volumen kleiner als das erste innere Volumen ist, wobei das Getränk bevorzugt ein kohlensäurehaltiges Getränk wie zum Beispiel Bier oder Erfrischungsgetränk ist,

Öffnen des Deckels, Einführen des Getränkebehälters in das erste innere Volumen (14) der Druckkammer und Schließen des Deckels,

Erhöhen des Druckwerts von einem vorbestimmten Niederdruckwert auf einen vorbestimmten Hochdruckwert durch Verwendung des Druckbeaufschlagungssystems,

Ausgeben des zweiten inneren Getränkevolumens (18) von dem zusammenklappbaren Getränkebehälter (16) durch Verwendung des Druckbeaufschlagungssystems, während der Hochdruckwert innerhalb des ersten inneren Volumens durch Verwendung des Druckbeaufschlagungssystems aufrechterhalten wird,

Bestimmen der Anzahl von Betriebszyklen, welche die Summe von Betriebszyklen des Druckbeaufschlagungssystems definiert, das dazu verwendet wird, das zweite innere Getränkevolumen auszugeben, und

Etablieren eines Maßes des spezifischen Gasvolumens pro Betriebszyklus des Druckbeaufschlagungssystems des Getränkeausgabesystems durch Verwendung des vorbestimmten Hochdruckwerts, des zweiten inneren Volumens und der Anzahl von Betriebszyklen.

## Revendications

1. Procédé d'étalonnage, ledit procédé comprenant les étapes de:

fournir un système de distribution de boissons (10), ledit système de distribution de boissons comprenant une chambre de pression (12) ayant un couvercle amovible et définissant un premier volume intérieur (14), ladite chambre de pression (12) étant reliée de manière fluide à un système de pressurisation (42), ledit système de pressurisation (42) étant capable de fournir un volume de gaz spécifique par cycle de fonctionnement dudit système de pressurisation audit premier volume intérieur (14) de ladite chambre de pression (12), ladite chambre de pression (12) ayant en outre un capteur de pression (46) pour capter la pression dudit premier volume intérieur (14) de ladite chambre de pression (12),

fournir un récipient de boissons compressible (16), ledit récipient de boissons compressible (16) comportant un deuxième volume intérieur de boissons (18), ledit deuxième volume intérieur étant inférieur audit premier volume intérieur (14), ladite boisson étant de préférence une boisson gazeuse telle que de la bière, une boisson sans alcool ou du vin,

ouvrir ledit couvercle, introduire ledit récipient de boissons (16) dans ledit premier volume intérieur (14) de ladite chambre de pression (12) et fermer ledit couvercle,

augmenter ladite valeur de pression d'une valeur de pression basse prédéterminée à une valeur de pression élevée prédéterminée en utilisant ledit système de pressurisation,

déterminer le nombre de cycles de fonctionnement définissant la somme de cycles de fonctionnement dudit système de pressurisation utilisé pour augmenter ladite valeur de pression de ladite valeur de pression basse prédéterminée à ladite valeur de pression élevée prédéterminée, et

établir une mesure dudit volume spécifique de gaz par cycle de fonctionnement dudit système de pressurisation dudit système de distribution de boissons en utilisant ladite valeur de pression basse prédéterminée, ladite valeur de pression élevée prédéterminée, ledit premier volume intérieur, ledit deuxième volume intérieur et ledit nombre de cycles de fonctionnement.

2. Procédé selon la revendication 1, dans lequel ladite mesure dudit volume spécifique de gaz par cycle de fonctionnement est établi par:

l'estimation d'un produit en multipliant la différence entre ladite valeur de pression élevée prédéterminée et ladite valeur de pression basse prédéterminée, et la différence entre ledit premier volume intérieur et ledit deuxième volume intérieur, et

la division dudit produit et ledit nombre de cycles de fonctionnement.

3. Procédé selon l'une des revendications précédentes, dans lequel le nombre de cycles de fonctionnement est déterminé en mesurant le temps durant lequel les cycles de fonctionnement sont effectués, ou, alternativement, dans lequel ledit système de pressurisation est entraîné par un moteur électrique, le nombre de cycles de fonctionnement étant déterminé en mesurant le nombre de tours dudit moteur électrique durant lequel lesdits cycles de fondtionnement sont effectués, ou, encore alternativement, dans lequel ledit système de pressurisation comprend un piston alternatif, le nombre de cycles de fonctionnement étant déterminé en mesurant le nombre de fluctuations de pression intervenant à l'intérieur dudit volume intérieur lorsque ledit système de pressurisation est activé, ou, encore alternativement, dans lequel ledit système de pressurisation est entraîné par un moteur électrique et ledit système de pressurisation comprend un piston alternatif, le nombre de cycles de fonctionnement étant déterminé en mesurant le nombre de courants de crête dans l'alimentation en courant dudit moteur électrique.

4. Procédé selon l'une quelconque des revendications précédentes, dans lequel ladite valeur de pression basse prédéterminée se situe dans l'ordre de 1,4 à 1,6 bars, telle que 1,5 bars, et ladite valeur de pression élevée prédéterminée se situe dans l'ordre de 1,6 bars à 1,8 bars, telle que 1,7 bars.

5. Procédé selon l'une quelconque des revendications précédentes, dans lequel ledit deuxième volume intérieur (18) est entre 10 litres et 10,1 litres.

6. Procédé selon l'une quelconque des revendications précédentes, dans lequel ladite valeur de pression basse prédéterminée, et/ou ladite valeur de pression élevée prédéterminée, et/ou ledit deuxième volume intérieur sont entrées en utilisant un dispositif d'entrée dudit système de distribution de boissons.

**7.** Procédé selon l'une quelconque des revendications précédentes, dans lequel ledit premier volume intérieur (14) est compensé par le volume de la matière plastique utilisé pour le récipient (16).

**8.** Procédé selon l'une quelconque des revendications précédentes, ledit procédé comportant en outre l'étape de présenter une indication visuelle étant visible de l'extérieur dudit système de distribution de boissons de mesure dudit volume spécifique de gaz par cycle de fonctionnement.

**9.** Procédé selon l'une quelconque des revendications précédentes, dans lequel ledit premier volume intérieur se situe entre 5 litres et 50 litres, tel que de 5 à 10 litres, de 20 à 30 litres, de 30 à 40 litres, ou de 40 à 50 litres.

**10.** Procédé selon l'une quelconque des revendications précédentes, dans lequel ledit procédé comprend en outre les étapes de:

mesurer une unité de temps représentant le temps nécessaire pour augmenter ladite pression de ladite valeur de pression basse prédéterminée à ladite valeur de pression élevée prédéterminée, et
établir une mesure dudit volume de gaz spécifique par unité de temps d'opération du système de pressurisation du système de distribution de boissons en utilisant ladite valeur de pression basse prédéterminée, ladite valeur de pression élevée prédéterminée, ledit premier volume intérieur, ledit deuxième volume intérieur, et ladite unité de temps.

**11.** Procédé pour déterminer un volume résiduel de boisson, ledit procédé comprenant la réalisation dudit procédé d'étalonnage selon l'une quelconque des revendications précédentes, et en outre, la réalisation des étapes suivantes en réponse à la détection de ladite valeur de pression basse dudit premier volume intérieur (14):

l'augmentation de ladite pression dans ledit premier volume intérieur (14) de ladite valeur de pression basse à ladite valeur de pression haute en utilisant ledit système de pressurisation (42), la détermination du nombre de cycles de fonctionnement définissant la somme de cycles de fonctionnement du système de pressurisation (42) utilisée pour augmenter ladite valeur de pression de ladite valeur de pression basse à ladite valeur de pression haute, et
la mise en place d'une mesure dudit volume résiduel de boisson inclue dans ledit récipient de boissons compressible (16), ladite mesure étant basée sur un volume de gaz spécifique par cycle de fonctionnement dudit système de pressurisation (42), ledit premier volume intérieur (14), ladite valeur de pression basse prédéterminée et ladite valeur de pression élevée prédéterminée.

**12.** Procédé selon la revendication 11, comprenant en outre l'étape d'effectuer un reétalonnage en réalisant une mesure dudit volume de gaz spécifique par cycle de fonctionnement dudit système de pressurisation dudit système de distribution de boissons en utilisant ladite valeur de pression basse prédéterminée, ladite valeur de pression élevée prédéterminée, ledit premier volume intérieur, ledit deuxième volume intérieur et ledit nombre de cycles de fonctionnement.

**13.** Système de distribution de boissons (10), ledit système de distribution de boissons comprenant:

une chambre de pression (12) ayant un couvercle amovible et définissant un premier volume intérieur (14) pour recevoir un récipient de boissons compressible (16), ledit récipient de boissons compressible contenant un deuxième volume intérieur de boissons (18), ledit deuxième volume intérieur étant inférieur audit premier volume intérieur (14), ladite boisson étant de préférence une boisson gazeuse telle que de la bière ou une boisson sans alcool,
un système de pressurisation (42) relié de manière fluide à ladite chambre de pression (12), ledit système de pressurisation (42) étant capable de fournir un volume de gaz spécifique par cycle de fonctionnement dudit système de pressurisation audit premier volume intérieur de ladite chambre de pression (12), ledit système de pressurisation (42) étant capable d'augmenter ladite valeur de pression d'une valeur de pression basse prédéterminée à une valeur de pression haute prédéterminée,
un capteur de pression (46) pour capter une valeur de pression correspondant à la pression absolue dudit premier volume intérieur de ladite chambre de pression,
une unité de calculation (48) pour déterminer un nombre de cycles de fonctionnement définissant la somme de cycles de fonctionnement du système de pressurisation utilisé pour augmenter ladite valeur de pression basse prédéterminée à ladite valeur de pression élevée prédéterminée, et **caractérisée en ce que** le système de distribution de boissons comprend
une unité de traitement pour établir une mesure d'un volume de gaz spécifique par cycle de fonctionnement dy système de pressurisation (42) du système de distribution de boissons (10) en utilisant ladite valeur de pression basse prédéterminée, ladite valeur de pression élevée prédéterminée, ledit premier volume intérieur, ledit deuxième volume intérieur, et ledit nombre de cycles de fonctionnement.

14. Système selon la revendication 13, dans lequel ledit système de pressurisation (42) inclut un boîtier, un piston alternatif (52) opérant à l'intérieur dudit boîtier et une valve unidirectionnelle, chaque cycle de fonctionnement incluant une course avant et une course de recul suivante dudit piston (52), ledit volume spécifique étant égal audit volume couvert par chaque course dudit piston, ou alternativement, où ledit système de pressurisation (42) inclut un boîtier et un élément de rotation opérant à l'intérieur dudit boîtier, chaque cycle de fonctionnement incluant une rotation de 360° dudit élément de rotation, ledit volume spécifique étant égal audit volume couvert par ledit élément de rotation pendant la rotation de 360 degrés.

15. Procédé d'étalonnage et de distribution combiné, ledit procédé comprenant les étapes de:

    fournir un système de distribution de boissons (10), ledit système de distribution de boissons comprenant une chambre de pression (12) ayant un couvercle amovible et définissant un premier volume intérieur (14), ladite chambre de pression (12) étant reliée de manière fluide à un système de pressurisation (42), ledit système de pressurisation étant capable de fournir un volume de gaz spécifique par cycle de fonctionnement dudit système de pressurisation audit premier volume intérieur (14) de ladite chambre de pression (12), ladite chambre de pression ayant en outre un capteur de pression (46) pour capter la pression dudit premier volume intérieur (14) de ladite chambre de pression,
    fournir un récipient de boissons compressible (16), ledit récipient de boissons compressible (16) comportant un deuxième volume intérieur de boissons (18), ledit deuxième volume intérieur étant inférieur audit premier volume intérieur, ladite boisson étant de préférence une boisson gazeuse telle que de la bière ou une boissons sans alcool,
    ouvrir ledit couvercle, introduire ledit récipient de boissons dans ledit premier volume intérieur (14) de ladite chambre de pression et fermer ledit couvercle,
    augmenter ladite valeur de pression d'une valeur basse prédéterminée à une valeur de pression élevée prédéterminée en utilisant ledit système de pressurisation,
    distribuer ledit deuxième volume intérieur de boissons (18) dudit récipient de boissons compressible (16) en utilisant ledit système de distribution de boissons tout en maintenant ladite valeur de pression élevée à l'intérieur dudit premier volume intérieur en utilisant ledit système de pressurisation,
    déterminer le nombre de cycles de fonctionnement définissant la somme de cycles de fonctionnement dudit système de pressurisation utilisé pour distribuer ledit deuxième volume intérieur de boisson,
    et établir une mesure dudit volume spécifique de gaz par cycle de fonctionnement dudit système de pressurisation dudit système de distribution de boissons en utilisant ladite valeur de pression basse prédéterminée, ledit deuxième volume intérieur et ledit nombre de cycles de fonctionnement.

FIG.1B

FIG.1A

FIG.1D

FIG.1C

FIG. 1E

FIG. 2

FIG. 3

FIG. 4A

FIG. 4B

FIG. 5

FIG. 6

**REFERENCES CITED IN THE DESCRIPTION**

**Patent documents cited in the description**

- WO 2007019848 A
- WO 2007019849 A
- WO 2007019850 A
- WO 2007019851 A
- WO 2007019853 A
- US 4225057 A
- US 5511694 A
- US 20080071424 A
- US 7096617 B2
- US 7337920 B2
- EP 1218286 B1
- US 3311267 A
- GB 1223848 A
- US 3956934 A
- GB 1577499 A
- GB 2077432 A
- GB 2099584 A
- EP 2065685 A2
- US 20090165477 A1
- EP 0791810 A2
- EP 2041525 A1
- GB 2192989 A
- GB 2094474 A
- EP 0414156 A2
- WO 2004050537 A2
- EP 2053014 A1
- EP 2091858 A1
- DE 3511224
- US 5837944 A
- GB 2354080 A
- US 7255003 B2
- US 5007560 A
- US 5894089 A
- US 6260414 B1
- US 6925872 B2
- US 7302846 B2
- EP 1009978 A1
- GB 2170602 A
- US 4732297 A
- GB 2273560 A
- US 6819250 B2
- EP 0613854 A
- JP 2007278778 A
- EP 1506523 A
- JP 2005274204 A
- US 5909825 A
- GB 2263687 A
- US 20050194399 A1
- WO 2012010659 A
- WO 2009024147 A